# FASCICULE DE BREVET EUROPEEN

(11) **EP 1 035 328 B1**
(45) Date de publication et mention de la délivrance du brevet: **21.09.2005**
(21) Numéro de dépôt: 99403162.3
(22) Date de dépôt: 16.12.1999
(51) Int. Cl.: F04D 13/08, H02K 11/04, H02K 5/132, F04D 15/02

(54) **Groupe motopompe submersible à circuit de démarrage intégré**
Tauchmotorpumpengruppe mit integriertem Startschaltkreis
Submersible motor pump set with integrated start-up circuit

(30) Priorité: 05.03.1999 FR 9902764
(43) Date de publication de la demande: 13.09.2000
(73) Titulaire: KSB S.A.S, 92230 Gennevilliers (FR)
(72) Inventeur: Berthon, Jacques, Résidence des Jardins du Bourg, 59130 Lambersart (FR); Symoens, Louis, 59155 Faches-Thumesnil (FR)
(74) Mandataire: Eidelsberg, Victor Albert

(56) Documents cités:
- EP-A- 0 887 907
- DE-A- 2 801 358
- PATENT ABSTRACTS OF JAPAN vol. 1998, no. 12, 31 octobre 1998 (1998-10-31) & JP 10 201168 A (TOSHIBA CORP), 31 juillet 1998 (1998-07-31)

## Description

La présente invention se rapporte aux groupes motopompes submersibles et tout particulièrement aux groupes motopompes submersibles antidéflagrants voir DE-A-2 801 358.

Un groupe motopompe submersible comprend un moteur entraînant un impulseur. Une enveloppe étanche au liquide à véhiculer entoure le moteur. Il est prévu un circuit électrique de démarrage du moteur, destiné à limiter l'appel de courant. Un circuit électrique classique de démarrage peut comprendre trois triacs régulés en angle de phase, qui sont associés à trois contacts permettant de les shunter en fin de cycle de démarrage pour qu'ils ne chauffent pas. Les triacs sont commandés par un module qui commande l'alimentation dans un premier temps à une certaine tension inférieure à une seconde tension dans un deuxième temps. Le circuit comporte également deux minuteries qui déterminent la durée d'alimentation en la première et en la seconde tension. Lorsque les durées préconisées par les deux minuteries sont expirées, il est prévu une commande qui court-circuite les triacs, de sorte que l'alimentation se fait par les contacts.

Ce circuit électrique de démarrage du moteur, relativement compliqué, était jusqu'ici disposé dans un boîtier à distance du groupe motopompe et relié à celui-ci par les connexions électriques. La complexité de ces connexions faisaient que l'installation d'un groupe motopompe à circuit électrique de démarrage de ce genre nécessitait l'intervention d'un électricien spécialisé, connaissant bien le schéma de raccordement.

L'invention pallie cet inconvénient par un groupe motopompe submersible qui ne nécessite, pour son montage, qu'une simple opération de branchement électrique, sans donc qu'un électricien averti soit nécessaire et ait à procéder à des réglages et à la lecture d'un schéma de raccordement d'un coffret électrique peu intelligible à tout autre que lui.

Suivant l'invention, le circuit de démarrage est fixé à l'intérieur de l'enveloppe.

On ne cherche plus, comme on le faisait jusqu'ici, à mettre le moteur en marche à partir d'un coffret ou armoire électrique qui n'avait pas besoin d'être étanche parce qu'il était placé à distance du moteur et donc en dehors du liquide à véhiculer et qui pouvait s'adapter à de nombreux types de moteurs, pourvu qu'un électricien veuille bien se charger du travail de réglage et de montage. Bien au contraire, le circuit de démarrage est maintenant affecté au moteur. Mais, comme le groupe est monté en usine, on peut régler le circuit de démarrage à l'avance et se contenter d'un simple branchement sans avoir à effectuer de réglage lors de l'installation. Le montage est simplifié à l'extrême.

Suivant un perfectionnement, une première sonde de la température du moteur est placée dans le moteur et est reliée électriquement au circuit de démarrage, de manière à ouvrir le circuit de démarrage lorsque la température dépasse un premier seuil supérieur prescrit et à le refermer lorsqu'elle revient en-dessous d'un seuil inférieur prescrit. On obtient ainsi la protection nécessaire en cas de surcharge temporaire, tout en ayant un montage très simplifié, puisque la première sonde placée dans le moteur fait également partie du groupe motopompe et qu'ainsi les fils de liaison entre la première sonde et le circuit de démarrage peuvent être de longueur très réduite et puisque le raccordement s'effectue lui aussi en usine.

Suivant un mode de réalisation tout particulièrement préféré, parce qu'il permet une protection antidéflagrante, une deuxième sonde de température est placée dans le moteur et reliée électriquement au circuit de démarrage, de manière à ouvrir le circuit de démarrage lorsque la température dépasse un deuxième seuil supérieur prescrit plus grand que le premier seuil supérieur et à maintenir le circuit ouvert tant qu'une instruction particulière de fermeture n'est pas envoyée au circuit de démarrage. On obtient pour cette deuxième sonde les mêmes avantages que pour la première.

Au dessin annexé, donné uniquement à titre d'exemple :

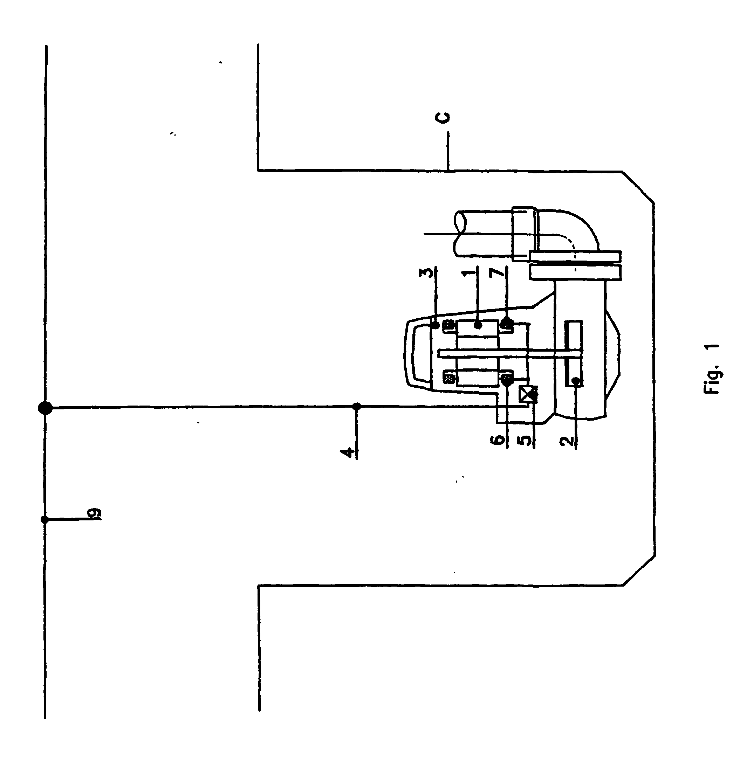

la figure 1 est une vue schématique en coupe d'un groupe motopompe suivant l'invention, tandis que

la figure 2 est un schéma de son circuit électrique.

Le groupe comprend un moteur 1 entraînant un impulseur 2. Le moteur 1 est entouré d'une enveloppe 3 étanche au liquide à véhiculer. Le moteur 1 est alimenté par le secteur par une ligne 4 qui passe à travers l'enveloppe 3 et sur laquelle sont montés, à l'intérieur de l'enveloppe, le circuit 5 de démarrage, une première sonde 6 de température et une deuxième sonde 7 de température, toutes les deux placées dans le moteur.

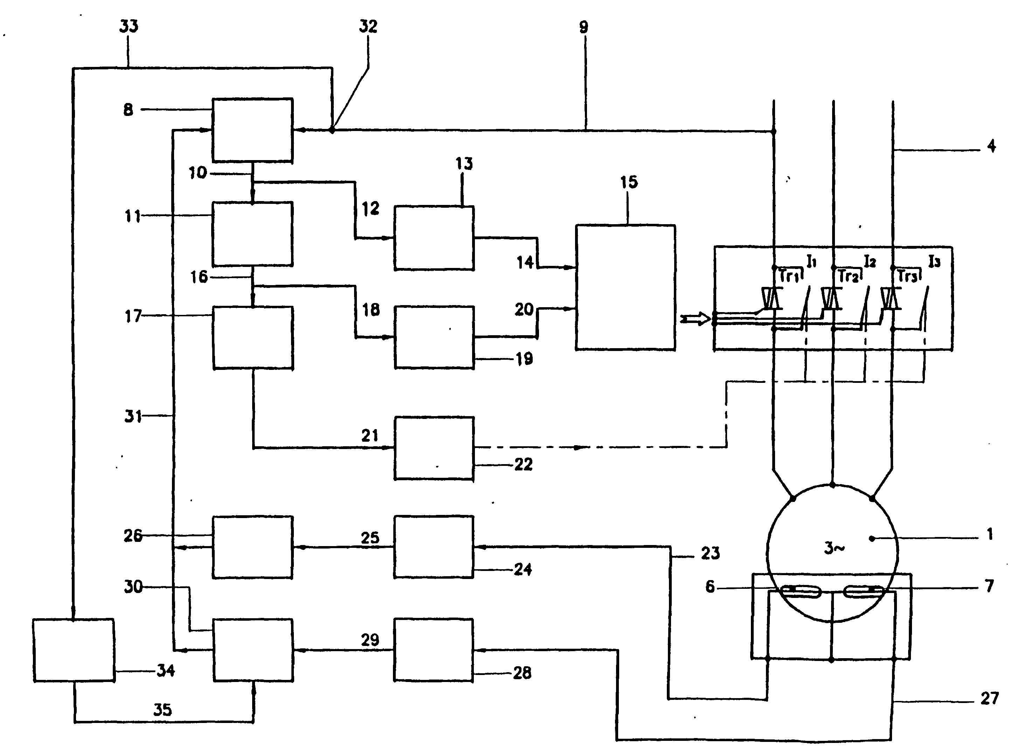

Sur le schéma représenté à la figure 2, on reconnaît le moteur 1 qui est alimenté par le réseau 4 triphasé. Le circuit comprend un module 8 de mise en marche et d'arrêt alimenté par le réseau par un conducteur 9. Le module 8 est relié par un conducteur 10 à une première minuterie 11 et par un conducteur 12 à un module 13 d'ordre d'alimentation du moteur sous une tension de 230 volts. Le module 13 est relié par un conducteur 14 à un module 15 de commande de trois triacs T1, T2, T3 montés respectivement sur les trois lignes de phase du réseau 4 alimentant le moteur 1. En parallèle de chaque triac est monté un interrupteur 11, 12, 13.

La première minuterie 11 est reliée par un conducteur 16 à une seconde minuterie 17 et par un conducteur 18 à un circuit 19 d'alimentation du moteur sous 400 volts. Le circuit 19 est relié par un conducteur 20 au module 15. La seconde minuterie 17 est reliée par un conducteur 21 à un module 22 de commande des relais 11, 12, 13.

Sur le moteur, on reconnaît les deux sondes 6 et 7. La première sonde 6 étant reliée par un conducteur 23 à un module 24 de commande à 140°C, qui est relié par un conducteur 25 à un module 26 d'hystérésis de refroidissement.

La seconde sonde 7 est reliée par un conducteur 27 à un module 28 de commande à 160°C, lequel module 28 est relié par un conducteur 29 à un module 30 de mise en mémoire que la température est supérieure à 160°C. Les modules 26 et 30 sont reliés par un conducteur 31 au module 8. D'un point d'intersection 32 sur le conducteur 9, en amont du module 8, un conducteur 33 part, par l'intermédiaire d'un conducteur 35, vers un module 34 de remise à zéro du module 30.

Le groupe motopompe submersible et antidéflagrant fonctionne de la manière suivante.

Lors de la mise sous tension, le module 8 commande d'abord le module 11, lequel commande le module 2 qui fait fonctionner les triacs sous une tension de 230 volts. Le moteur 1 démarre en sous tension donc à faible courant. Lorsque le temps décompté par la minuterie 11 est expiré, c'est le module 19 qui commande le module 2 en sorte qu'il est appliqué aux triacs T1, T2, T3 une tension de 400 volts. Le moteur fonctionne sous cette tension. A l'expiration du délai fixé par la seconde minuterie 17, les triacs sont court-circuités par le module 22 qui ferme les interrupteurs I1, I2, I3. Le moteur fonctionne sous la tension nominale.

Si la première sonde 6 de température détecte une température supérieure à 140°C, le module 24 donne l'ordre, par l'intermédiaire du conducteur 25, du module 26 et du conducteur 31, au module 8 d'ouvrir le circuit. Lorsque le module 26 constate que la température s'est abaissée à 120°C, les opérations de démarrage décrites précédemment sont reprises.

Lorsque la seconde sonde 7 de température constate que la température s'est élevée au-dessus de 160°C, elle transmet cette information au module 28, lequel donne l'ordre, par l'intermédiaire du module 30 et du conducteur 31, au module 8 d'ouvrir le circuit. En raison du module 30 de mise en mémoire, le circuit restera ouvert tant qu'une intervention manuelle, par l'intermédiaire du module 34 de remise à zéro, ne remettra pas le module 30 à zéro, ce qui correspond à la norme antidéflagrante.

## Revendications

1. Groupe motopompe submersible, comprenant un moteur (1) entraînant un impulseur (2), une enveloppe (3) étanche au liquide à véhiculer pour le moteur (1) et un circuit (5) électrique de démarrage du moteur (1), **caractérisé en ce que** le circuit (5) de démarrage est fixé à l'intérieur de l'enveloppe (3).

2. Groupe suivant la revendication 1, **caractérisé par** une première sonde (6) de la température du moteur placée dans le moteur et reliée électriquement au circuit (5) de démarrage, de manière à ouvrir le circuit de démarrage lorsque la température dépasse un premier seuil supérieur prescrit et à le refermer lorsqu'elle revient en-dessous d'un seuil inférieur prescrit.

3. Groupe suivant la revendication 1 ou 2, **caractérisé par** une deuxième sonde (7) placée dans le moteur et reliée électriquement au circuit (5) de démarrage, de manière à ouvrir le circuit de démarrage lorsque la température dépasse un deuxième seuil supérieur plus grand que le premier seuil supérieur et à maintenir le circuit ouvert tant qu'une instruction particulière de fermeture n'est pas envoyée au circuit de démarrage.

## Patentansprüche

1. Tauchmotorpumpengruppe, die einen ein Pumpenrad (2) antreibenden Motor (1), ein gegen das zu transportierende Wasser abgedichtetes Motorgehäuse (3) und einen elektrischen Startschaltkreis (5) für den Motor (1) enthält, ***dadurch gekennzeichnet, dass*** der Startschaltkreis (5) im Innern des Gehäuses (3) befestigt ist.

2. Tauchmotorpumpengruppe nach Anspruch 1, ***gekennzeichnet durch*** eine erste Sonde (6) für die Temperatur des Motors, die in dem Motor angebracht und elektrisch mit dem Startschaltkreis (5) verbunden ist, so dass sie den Startschaltkreis öffnet, wenn die Temperatur einen ersten vorgegebenen oberen Schwellenwert überschreitet, und ihn schließt, wenn die Temperatur unter einen vorgegebenen unteren Schwellenwert zurückkehrt.

3. Tauchmotorpumpengruppe nach den Ansprüchen 1 oder 2, ***gekennzeichnet durch*** eine zweite Sonde (7), die im Motor angebracht und elektrisch mit dem Startschaltkreis (5) verbunden ist, so dass sie den Startschaltkreis öffnet, wenn die Temperatur einen zweiten oberen Schwellenwert überschreitet, der höher als der erste obere Schwellenwert ist, und den Startschaltkreis so lange offen hält, bis ein besonderer Schließbefehl an den Startschaltkreis gesendet wird.

## Claims

1. Submersible electric pump, comprising a motor (1) driving an impeller (2), a casing (3) for the motor (1), said casing being impermeable to the liquid being conveyed, and an electrical starting circuit (5) for starting the motor (1), **characterized in that** the starting circuit (5) is fastened inside the casing (3).

2. Electric pump according to Claim 1, **characterized by** a first motor temperature probe (6) placed in the motor and electrically connected to the starting circuit (5), so as to open the starting circuit when the temperature exceeds a prescribed first upper threshold and to close it when the temperature comes back down below a prescribed lower threshold.

3. Electric pump according to Claim 1 or 2, **characterized by** a second probe (7) placed in the motor and electrically connected to the starting circuit (5), so as to open the starting circuit when the temperature exceeds a second upper threshold, higher than the first upper threshold, and to keep the circuit open until a particular closure instruction has been sent to the starting circuit.
